# NEUE EUROPÄISCHE PATENTSCHRIFT

(11) **EP 0 290 536 B2**
(45) Veröffentlichungstag und Bekanntmachung des Hinweises auf die Entscheidung über den Einspruch: **24.04.1996**
(45) Hinweis auf die Patenterteilung: 18.09.1991
(21) Anmeldenummer: 87907582.8
(22) Anmeldetag: 24.11.1987
(51) Int. Cl.: B29C 47/02, B29C 47/00, E06B 3/62

(54) **VERFAHREN ZUR HERSTELLUNG EINES FENSTERPROFILES MIT EINEM DICHTUNGSELEMENT**
PROCESS FOR THE MANUFACTURE OF A WINDOW SECTION WITH A SEALING ELEMENT
PROCEDE DE FABRICATION D'UN PROFILE POUR FENETRES AVEC UN ELEMENT D'ETANCHEITE

(30) Priorität: 29.11.1986 DE 3640887
(43) Veröffentlichungstag der Anmeldung: 17.11.1988
(73) Patentinhaber: SCHAUMSTOFFWERK GREINER GESELLSCHAFT M.B.H., A-4550 Kremsmünster Oberösterreich (AT)
(72) Erfinder: ESSING, August, D-4236 Hamminkeln 3 (DE); UHLE, Peter, D-4236 Hamminkeln 3 (DE)
(74) Vertreter: Rau, Manfred, Dr. Dipl.-Ing.
(86) Internationale Anmeldenummer: DE8700545
(87) Internationale Veröffentlichungsnummer: WO8803863

(56) Entgegenhaltungen:
- EP-A- 0 069 021
- EP-A- 0 097 247
- DE-A- 1 812 484
- DE-A- 2 551 766
- DE-A- 2 737 046
- FR-A- 1 373 279
- FR-A- 2 431 644
- GB-A- 1 076 033
- NL-A- 7 211 692
- US-A- 4 581 807
- W. Michael, "Extrusionswerkzeuge für Kunststoffe", 1979, Carl Hauser Verlag, München/Wien, S. 301

## Beschreibung

Die Erfindung betrifft zunächst ein Verfahren zur Herstellung eines Fensterprofils mit einem Dichtungselement nach den Merkmalen des Oberbegriffes des Patentanspruches 1.

Bei Produkten, bei welchen Wert auf Langlebigkeit gelegt wird, insbesondere auch bei Fensterprofilen, ist es daher derzeit allgemein bekannt, die Profile mit gesondert hergestellten und nachträglich in dafür vorgesehene Dichtungshalterungsbereiche einrastenden Dichtungselementen zu versehen. Die so hergestellten Dichtungen und das weitere Handling derselben sind vergleichsweise sehr aufwendig und auch nicht unproblematisch. Durch die Gleitfähigkeit der Dichtungselemente in den Dichtungshalterungsbereichen und die unterschiedlichen Dehnungskoeffizienten des Fensterprofiles oder dgl. einerseits und der Dichtungselemente andererseits können sich ungleichmäßige Schrumpfeffekte einstellen, welche die Verarbeitung erschweren, oder aber auch nachträglich durch Spaltbildungen im Bereich von Dichtungsstößen zu Undichtigkeiten führen können. Dennoch hat diese Technik immer noch eine große Bedeutung, da sowohl technisch als auch wirtschaftlich geeignete Alternativen fehlen und insbesondere durch die Gefahr von Beschädigungen und Alters- oder Ermüdungserscheinungen von Dichtungselementen der Austausch derselben notwendig werden kann.

Bei einem weiteren bekannten Verfahren zum Herstellen von Fensterprofilen - gemäß NL-A 7211692 - wird das plastifizierte Kunststoffmaterial zur Herstellung des Dichtelementes in Extrusionsrichtung nur unwesentlich nach der Düse zur Herstellung des Fensterprofils eingebracht. Dadurch erfolgt das Einbringen des Dichtungselementes ebenfalls in Art einer Koextrusion. Aus diesem Grund entsteht neben der physikalischen Verbindung auch eine chemische Verbindung zwischen dem Dichtungselement und dem Fensterprofil, wodurch nach wie vor die für das Dichtungselement verwendeten Kunststoffe nur in beschränktem Umfang variiert werden können.

Es ist aber auch bereits bekannt, Dichtungselemente bei derartigen Fensterprofilen aus elastomeren oder thermoplastischen Kunststoffen herzustellen. Es ist desgleichen bekannt, derartige Dichtungselemente im sogenannten Koextrusionsverfahren zusammen mit dem Fensterprofil herzustellen, wobei Teilbereiche des Dichtungselementes unmittelbar an das gleichzeitig hergestellte Fensterprofil extrudiert werden, derart, daß sich eine innige Verbindung zwischen beispielsweise dem Hart-PVC-Werkstoff des Fensterprofils und dem beispielsweise Weich-PVC-Werkstoff des Dichtungselements ergibt. Derartig als Dichtungsfahnen koextrudierte Dichtungselemente sind nur bei gewissen Materialkombinationen möglich, nämlich wenn sich aufgrund der Schmelzpunkte der Werkstoffpaarung während des Extrusionsprozesses eine Verschweißung des Dichtungselementes mit dem Dichtungshalterungsbereich des Fensterprofiles ergibt.

Auch bleibt die Fläche des Hauptprofiles, welche durch die koextrudierte Dichtung abgedeckt wird, von der nachfolgenden, extrusionstechnisch notwendigen Kalibrierung unberührt. Die Formgenauigkeit des Hauptprofiles ist somit beeinträchtigt. Es kommt vor, daß in solchen Bereichen Wandungen und Stege einfallen und sich dadurch Spannungen in dem gesamten Profilkörper aufbauen.

In der Regel wird daher im Koextrusionsverfahren auch nur ein Dichtungselement in einer Ebene angespritzt obwohl oftmals auch mehrere Dichtungselemente im gleichen Profilkörper benötigt werden.

Die rohstoffbezogenen Maschinenanlaufverluste (Rohstoffverbrauch für die Zeit des Maschinenanlaufes bis zum sogenannten "Stehen" des Fensterprofiles oder dgl. im gesamten Extrusionsstraßendurchlauf) sind durch die innige Verbindung von beispielsweise Hart-PVC mit Weich-PVC nicht mehr vollständig regenerationsfähig.

Das gleiche trifft zu für Maschinenstörungen, bei welchen die Maschine nicht abgestellt wird, und den gewöhnlichen Maschinenabstellprozeß.

Bei Beschädigungen oder dgl. der Dichtungselemente müssen diese mit vergleichsweise hohem Aufwand herausgeschnitten werden. Am fertigen Produkt (z.B. Fenster oder Türen) erfolgt dies per Hand. Verbunden damit sind unsaubere Schnittverläufe, Beschädigungen von Aufnahmestegen für die Dichtungselemente und das Verbleiben von Rückständen der koextrudierten Dichtungselemente, welche je nach Art der Verbindungsanordnung den Austausch von Dichtungselementen dann unmöglich machen, wenn Dichtungsreste in inniger Verbindung mit Dichtungshalterungsbereich verbleiben.

Verarbeitungsabfälle aus der Weiterverarbeitung solchermaßen koextrudierter Hauptprofile mit Dichtungselementen sind ebenfalls nicht vollständig regenerationsfähig, oder nur mit erheblichem Aufwand (Herausschneiden).

Es ist des weiteren bekannt, beispielsweise synthetische Dichtungselemente bzw. Dichtungsgummis auf andere als Trägenmaterial dienende Elemente aufzubringen und sie dort mit und auf dem Trägermaterial zu vulkanisieren.

Mit dem beschriebenen Koextrusionsverfahren sind zwar wirtschaftliche Vorteile verbunden, jedoch werden die aufgeführten Nachteile als schwerwiegend beurteilt.

Der Erfindung stellt sich sonach in verfahrensmäßiger Hinsicht die Aufgabe, ein Verfahren zur Herstellung eines Fensterprofils mit einem Dichtungselement so auszugestalten und auszubilden, daß eine möglichst wirtschaftliche Herstellung gegeben ist, ohne den Nachteil einer schlechten Austauschbarkeit des Dichtungselementes, bei gleichzeitig möglichst verbesserter Qualität des Produktes insgesamt.

Diese Aufgabe ist bei der im Anspruch 1 angegebenen Erfindung gelöst. Der überraschende Vorteil dieser Lösung liegt darin, daß das Dichtelement in dem vorproduzierten Fensterprofil unmittelbar hergestellt werden kann. Dadurch kann eine exakte Maßhaltigkeit durch die vorhergehende Profilierung des Fensterprofils im Bereich des Dichtelementes erzielt werden. Dadurch kann also ein Teil des Dichtungshalterungsbereiches als Formwerkzeug für dieses Dichtungselement verwendet werden. Darüber hinaus eröffnet sich nunmehr auch die Möglichkeit, daß bei einem notwendigen Austausch des Dichtungselementes vorgefertigte Dichtelemente nachträglich in die maßgenauen Dichtungsaufnahmenuten wieder eingesetzt werden können.

Vorteilhaft ist vor allem aber auch, daß eine "In-Line"-Lösung gefunden ist. Die Einbringung des Dichtungselementes geschieht auf der Extrusionsstraße, jedoch nach der Kalibrierung oder innerhalb eines Teilbereichs der Kalibrierung des Fensterprofiles oder dgl., mit den damit verbundenen Vorteilen. Eine Kalibrierung des Fensterprofiles ist bei dem erfindungsgemäßen Verfahren auch in denjenigen Bereichen gegeben, welche später durch das Dichtungselement überdeckt sind. Beispielsweise kann in einfacher Form der Dichtungshalterungsbereich zur Halterung des einextrudierten Dichtungselementes mit durch Einrollen oder dgl. erzeugten Kerben oder ähnlichem versehen sein. Nach Erkalten des extrudierten Dichtungselementes ist dieses dann schon durch die Formgebung an dem Fensterprofil bzw. in dem Dichtungshalterungsbereich des Fensterprofiles verankert. Zusätzlich kann sich auch, bei geeigneter Werkstoffpaarung, ein Anhaften ergeben, wie weiter unten noch im einzelnen erläutert ist.

Bei der Herstellung des Fensterprofiles mit dem Dichtungselement wirken also die Extrusionsmaschine und das Fensterprofil bzw. der Dichtungshalterungsbereich desselben hinsichtlich der Formgebung zusammen. Aufgrund der Elastizität des Dichtungselementes kann bei einem so hergestellten Fensterprofil das Dichtungselement durch Herausreißen aus dem Dichtungshalterungsbereich entfernt werden und durch ein anderes bzw. neues Dichtungselement, welches sodann einzuziehen ist, ersetzt werden.

Aufgrund der Hinterschneidung ist für das erkaltete Dichtungselement eine wirksame Halterung gegeben, sodaß ein Anhaften oder sonstige Umstände für die Halterung des Dichtungselementes nicht erforderlich sind.

Vorteilhaft ist weiters ein Vorgehen nach Patentanspruch 2. Hier kann schon über die Werkstoffkombination eine innige Verbindung zwischen dem Fensterprofil und dem Dichtungselement entstehen, sodaß das Dichtungselement nicht mehr ohne Kraftaufwand oder unbeabsichtigt entfernt werden kann.

Die Festigkeit der Verbindung zwischen dem Dichtungshalterungsbereich und dem Dichtungselement wird überwiegend, z.B. bei Kunststoffprofilen, bestimmt durch die Temperatur zum Zeitpunkt der Zusammenfügung. Je erkalteter das Fensterprofil bzw. der Dichtungshalterungsbereich desselben ist, desto geringer ist die Innigkeit des sich ergebenden Verbundes. Da bei dem erfindungsgemäßen Verfahren die Herstellung zwar "In-Line" erfolgt, jedoch nachgeordnet zu der Extrusion des Fensterprofiles selbst und der nachfolgenden Kalibrierung bzw. eines Teilbereichs der Kalibrierung, kann durch die Bestimmung der Abkühlstrecke ein bestimmter Abkühlzustand herbeigeführt werden, je nach gewünschtem innigen Verbund des anextrudierten Dichtungselementes. Die Innigkeit des Haftverbundes ist also genau zu steuern. Durch die Separierung des Anspritzprozesses lassen sich im übrigen die Toleranzen der Dichtungselemente bzw. der Dichtungshalterungsbereiche stark einengen und gleichzeitig auch mehrere Dichtungen mit hoher Paßformpräzision anspritzen. Die rohstoffbezogenen Maschinenanlaufverluste (dies gilt auch für Störungsphasen ohne Abstellen der Maschine bzw. Auslaufen der Maschine) behalten ihren Regenerationswert (die Anspritzung setzt erst dann ein oder läuft nur dann, wenn die Produktion des Fensterprofiles oder dgl. einwandfrei funktioniert).

Durch die Möglichkeit zur kontrollierten Verringerung bis zur Aufhebung der Innigkeit des Haftungsverbundes wird die Abtrennbarkeit der Dichtungselemente erleichtert, d.h. sie können abgezogen werden und kann das Verbleiben von Haftungsrückständen absolut minimiert bis aufgehoben werden (bei einem Einsatz von Trennmittel, wie nachstehend noch im einzelnen erläutert). Dies ermöglicht eine schnelle, kontrollierte und saubere Austauschmöglichkeit der Dichtungselemente auch am fertigen Produkt. Es ist auch ohne weiteres die Weiterverarbeitung von Stangen mit anextrudierten Dichtungselementen (saubere Schnitte und Verschweißungen) möglich. Ungleichmäßige Schrumpfeffekte (unter anderem etwa durch die weiter oben beschriebene leichte Kerbung) sind verhindert und die Vollwertigkeit von Verarbeitungsabfällen als Regenerat mit sehr geringem Zusatzaufwand (durch ein Abziehen der Dichtungselemente) gesichert.

Geeignete Trennmittels sind problemlos beispielsweise im Sprühverfahren auf die mit dem Dichtungselement in Kontakt kommende Fläche des Fensterprofils auftragbar und somit kostengünstig einsetzbar.

Das Dichtungselement kann aus einem Elastomer-Material bestehen, welches auf dem Fensterprofil bzw. dem Dichtungshalterungsbereich desselben ausvulkanisiert, wobei es sich in der Regel empfiehlt, auch hierbei vor dem Anextrudieren des Dichtungselementes ein geeignetes Trennmittel aufzutragen,

Mit dem erfindungsgemäßen Verfahren können auch Fensterprofile mit einem Dichtungselement versehen werden, die ursprünglich nicht für die wirtschaftlich vorteilhafte Koextrusion vorgesehen waren, ohne daß der Nachteil des fest anextrudierten Dichtungsprofiles und die damit verbundene Tatsache, daß dasselbe nicht mehr ausgewechselt werden kann, hingenommen werden muß. Es können damit auch Fensterprofile mit einem Dichtungselement in wirtschaftlich vorteilhafter Weise versehen werden, bei welchen eine Vorbehandlung vor Einbringung des Dichtungselementes erforderlich ist, beispielsweise eine Kaschierung mit einer Folie, eine Bedruckung oder dgl.

Diese Kerbung trägt einerseits dazu bei, das Dichtungselement in dem Dichtungshalterungsbereich zu halten, andererseits ist sie aber auch von Bedeutung bei unterschiedlichen Dehnungskoeffizienten des Dichtungselementes und des Fensterprofiles oder dgl.: Über die Kerbung ist gleichsam eine starke Dehnungskopplung zwischen dem Fensterprofil und dem Dichtungselement gegeben. Nach Erkalten des extrudierten Dichtungselementes ist dieses dann schon durch die Formgebung in dem Fensterprofil bzw. in dem Dichtungshalterungsbereich des Fensterprofiles verankert.

Die Bezeichnung "Kerbung" in vorstehender Beschreibung ist in einem umfassenden Sinne zu verstehen. Es können Kerben, aber auch sonstige bevorzugte durch Eindrücken erzeugte Unregelmäßigkeiten in dem Dichtungshalterungsbereich sein, welche die erwünschte Wirkung ergeben.

Eine besondere weitere Ausgestaltung des erfindungsgemäßen Verfahrens ist im Patentanspruch 4 gekennzeichnet. Dieser Freiraum ist bevorzugt innerhalb des Hinterschneidungsbereiches angeordnet. Er kann als Hohlraum gestaltet sein, oder auch dadurch geschaffen, daß in dem Hinterschneidungsbereich das Dichtungselement mit beinartigen Fortsätzen ausgebildet ist. Ein Vorteil eines solchen Freiraumes ist darin zu sehen, daß bei einem Herausziehen des Dichtungselementes aus dem Dichtungshalterungsbereich eine ausweichende Verformung des Dichtungselementes möglich ist, sodaß ohne ein Abreißen auch der in dem Hinterschneidungsbereich gefangene Teil des Dichtungselementes herausgezogen werden kann.

Nachstehend wird die Erfindung noch anhand der dargestellten, jedoch lediglich ein Ausführungsbeispiel zeigenden, Zeichnung näher erläutert, auf welcher zeigt :
- Fig. 1: eine perspektivische Teilansicht eines Fensterprofiles in Zusammenwirkung mit dem Extrusionskopf einer Extrusionsmaschine ;
- Fig. 2: eine Darstellung gemäß Fig.I, jedoch ohne Dichtungselement.

Dargestellt und beschrieben ist ein Extrusionskopf 1 einer im einzelnen nicht weiter dargestellten Extrusionsmaschine, welcher eine Extrusionsdüse 2 aufweist. Aus der Extrusionsdüse 2 tritt ein das Dichtungselement 3 bildender plastischer Strang aus, welcher teilweise durch die Extrusionsdüse 2 und teilweise durch den Dichtungshalterungsbereich 4 des Fensterprofiles 5 geformt wird.

Das Fensterprofil 5 wird mittels einer geeigneten Vorrichtung kontinuierlich in Richtung des Pfeiles I bewegt. Der Extrusionkopf 1 der Extrusionsmaschine ist zur Vorschubbewegung des Fensterprofiles 5 schräg ange ordnet. Ein geeigneter Extruder fördert das für die Herstellung des Dichtungselementes 3 plastisch aufbereitete Material in Richtung des Pfeiles II durch den Extrusionskopf 1 zu der Extrusionsdüse 2, wobei die Extrusionsdüse 2 im einzelnen so ausgebildet ist, daß sie mit einer gewissen Flächenüberdeckung dem Dichtungshalterungsbereich 4 des Fensterprofiles 5 zugeordnet ist.

Durch die Schräganordnung und die dadurch eintretende Richtungsänderung des plastischen Stranges ergibt sich vorteilhaft eine gute Ausfüllung des Dichtungshalterungsbereiches 4, insbesondere auch in den hinterschnittenen Bereichen a bzw. b.

Durch die erwähnten hinterschnittenen Bereiche a bzw. b des Dichtungshalterungsbereiches 4 ergibt sich eine formschlüssige Halterung des in dem Dichtungshalterungsbereich ausvulkanisierten Dichtungselementes 3. Nach Erkalten oder Ausvulkanisieren des Dichtungselementes 3 besitzt dieses dementsprechend seine gewünschte Endform und ist fertig in den für die Aufnahme vorgesehenen Bereich des Fensterprofils 5 eingezogen.

Der Dichtungshalterungsbereich kann, was im einzelnen nicht dargestellt ist, mit einer Kerbung versehen sein. Hierzu können auf der Extrusionsstraße in Produktions richtung vor dem Extrusionskopf 1 ein oder mehrere Spezial-Laufräder angeordnet sein, mit welchen die Kerben oder dgl. in den Dichtungshalterungsbereich eingebracht werden.

Bei Werkstoffkombinationen des Fensterprofiles 5 und des Dichtungselementes 3, bei welchen es zu einer innigen bzw. unlösbaren Verbindung zwischen diesen beiden Elementen kommt, jedoch das Dichtungselement 3 erforderlichenfalls wieder entfernt werden können soll, werden die Bereiche, in denen es zu einem unmittelbaren Kontakt zwischen dem Fensterprofil 5 bzw. genauer dem Dichtungshalterungsbereich 4, zu welchem auch die Bereiche 6 und 7 zählen, und dem Dichtungselement 3 kommt, mit einem geeigneten Trennmittel versehen.

Der Extrusionkopf 1 bzw. genauer die Extrusionsdüse 2 ist derart ausgebildet, daß sie mit dem Fensterprofil 5 an zwei im Querschnitt zueinander verwinkelt verlaufenden Führungsflächen 8 und 9 bzw. 10 und 11 zusammenwirkt. Es versteht sich, daß diese Führungsflächen 8 und 9 an dem Fensterprofil 5, wie auch die entsprechenden Führungsflächen an der Extrusionsdüse 2 nur dann vorgesehen sein können, wenn das Fensterprofil 5 entsprechend gestaltet ist. Die winklige Ausrichtung zueinander der Flächen 8 und 9 bzw. 10 und 11 ergibt eine definierte Führung für das Fensterprofil 5.

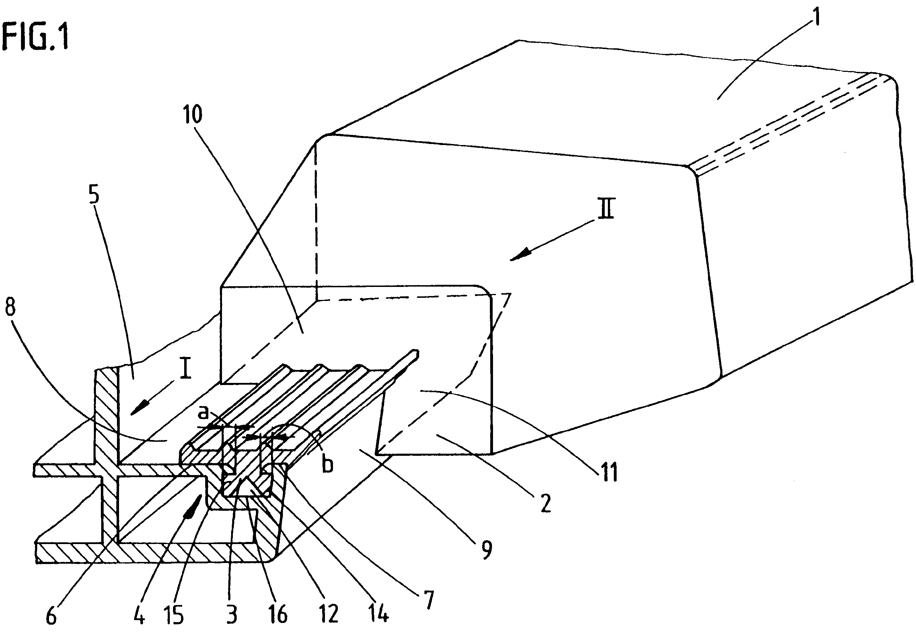

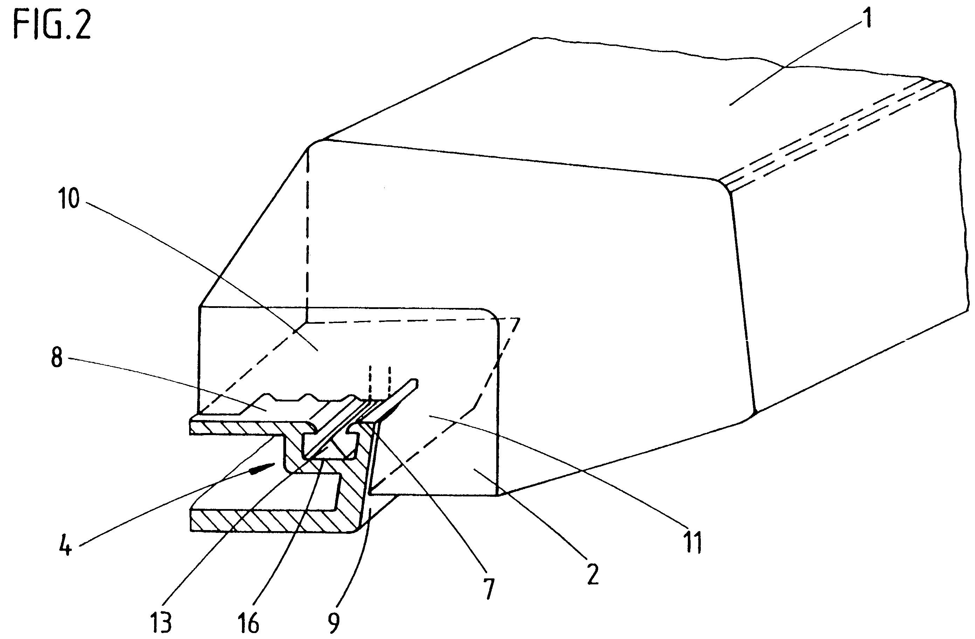

Wie Fig. 1 zu entnehmen ist, ist bei dem dargestellten Ausführungsbeispiel das Dichtungselement 3 mit beinartigen Fortsätzen 14 und 15 ausgebildet. Zwischen diesen befindet sich ein dreieckförmiger Freiraum 12. Der Freiraum 12 ist, wie sich insbesondere aus Figur 2 ergibt, durch einen Freihaltezapfen 13 geschaffen, welcher in dem Extrusionskopf 1 fest angeordnet ist. Der Freihaltezapfen 13 liegt bei dem dargestellten Ausführungsbeispiel unmittelbar auf der Fläche 16 inner halb der Hinterschneidungszone des Dichtungshalterungsbereiches auf.

Die in der vorstehenden Beschreibung, der Zeichnung und den Ansprüchen offenbarten Merkmale der Erfindung können sowohl einzeln als auch in beliebiger Kombination für die Verwirklichung der Erfindung in ihren verschiedensten Ausgestaltungen von Bedeutung sein.

## Patentansprüche

1. Verfahren zur kontinuierlichen Herstellung eines Fensterprofils aus extrudierbarem Kunststoff, mit einem Dichtungselement aus elastomerem oder thermoplastischem Kunststoff, wobei das Dichtungselement als plastischer Strang in einen durch eine hinterschnittene Nut gebildeten Dichtungshalterungsbereich des Fensterprofils extrudiert wird, dadurch gekennzeichnet, daß in einem einzigen Herstellvorgang zunächst das Fensterprofil mit dem Dichtungshalterungsbereich hergestellt wird, sodann der Dichtungshalterungsbereich kalibriert und darauffolgend der das Dichtungselement bildende plastische Strang in den kalibrierten Dichtungshalterungsbereich einextrudiert wird und daß
a) die Innigkeit des Haftverbundes zwischen Dichtungselement und Dichtungshalterungsbereich durch den Abkühlzustand des Fensterprofils gesteuert oder
b) der Dichtungshalterungsbereich vor Einbringung des Dichtungselementes mit einem Trennmittel oder einer Trennschicht versehen wird,
so daß das Dichtungselement abziehbar ist.

2. Verfahren nach Anspruch 1, dadurch gekennzeichnet, daß das Dichtungselement nach der Extrusion in dem Dichtungshalterungsbereich ausvulkanisiert.

3. Verfahren nach einem der Ansprüche 1 oder 2, dadurch gekennzeichnet, daß der Dichtungshalterungsbereich vor Einbringung des Dichtungselementes mit einer Kerbung versehen wird.

4. Verfahren nach einem der Ansprüche 1 bis 3, dadurch gekennzeichnet, daß das Dichtungselement mit Ausbildung eines Freiraumes extrudiert wird.

## Claims

1. A method for the continuous production of a window section from extrudable plastics material, with a sealing element of elastomeric or thermoplastic plastics material, in which the sealing element is extruded as a plastic line in a seal mounting region of the window section, formed by an undercut groove, characterised in that in a single manufacturing procedure firstly the window section is produced with the seal mounting region, then the seal mounting region is calibrated and thereafter the plastic line forming the sealing element is extruded into the calibrated seal mounting region and that
a) the closeness of the adhesion bond between the sealing element and seal mounting region is controlled by the cooling state of the window section or
b) before the introduction of the sealing element, the seal mounting region is provided with a separating medium or a separating layer, so that the sealing element is able to be removed.

2. A method according to Claim 1, characterised in that the sealing element, after extrusion, vulcanizes out in the seal mounting region.

3. A method according to one of Claims 1 or 2, characterised in that the seal mounting region is provided with a groove before the introduction of the sealing element.

4. A method according to one of Claims 1 to 3, characterised in that the sealing element is extruded with the formation of a free space.

## Revendications

1. Procédé de fabrication en continu d'un profilé de fenêtre en matière synthétique pouvant être extrudé, avec un élément d'étanchéité en matière synthétique élastomère ou thermoplastique, l'élément d'étanchéité étant extrudé sous forme de boudin plastique dans une zone de support de joint d'étanchéité constituée par une rainure contre-dépouillée du profilé de fenêtre, caractérisé en ce que d'abord est fabriqué lors d'une seule opération de fabrication le profilé de fenêtre avec la zone de support de joint d'étanchéité, ensuite la zone de support de joint d'étanchéité est calibrée et en ce qu'ensuite le boudin plastique constituant l'élément d'étanchéité est inséré par extrusion dans la zone de support de joint d'étanchéité calibré et en ce que
(a) l'intimité de l'adhésion entre l'élément d'étanchéité et la zone de support de joint d'étanchéité est commandée par l'état de refroidissement du profilé de fenêtre ou
(b) que la zone de support de joint d'étanchéité, avant l'introduction de l'élément d'étanchéité, est pourvue d'un agent de séparation ou d'une couche de séparation de façon que l'élément d'étanchéité puisse être retiré.

2. Procédé selon la revendication 1, caractérisé en ce que l'élément d'étanchéité est vulcanisé après l'extrusion dans la zone de support de joint d'étanchéité.

3. Procédé selon l'une des revendications 1 ou 2, caractérisé en ce que la zone de support de joint d'étanchéité est pourvu d'un encochage avant l'insertion de l'élément d'étanchéité.

4. Procédé selon l'une des revendications 1 à 3, caractérisé en ce que l'élément d'étanchéité est extrudé avec formation d'un espace libre.
